# EUROPEAN PATENT APPLICATION

(11) **EP 0 926 583 A1**
(43) Date of publication of application: **30.06.1999**
(21) Application number: 97203665.1
(22) Date of filing: 24.11.1997
(51) Int. Cl.: G06F 1/00

(54) **System for controlling the execution of a program or the like**

(71) Applicant: IRDETO B.V., 2132 HD Hoofddorp (NL)
(72) Inventor: Wajs, Andrew Augustine, 2023 AA Haarlem (NL); Becker, Johannes, Antonius, Hendricus Maria, Apartment No H304, Kikland WA 98034 (US)
(74) Representative: de Vries, Johannes Hendrik Fokke

(57) **Abstract**

A system for controlling the execution of a program or the like by a computer connected to a network is described. The system comprises a number of local controlling devices secured against unauthorized access, each of the devices being connected to a corresponding computer. Each of the devices comprises a processor, an address and means for communicating with the corresponding computer. The system further comprises a central control unit connected to the network and comprising means for communicating with each of the local control devices through the network. The control unit can forward an entitlement message to each of the local control devices, the entitlement message containing entitlement information regarding the use of the program. Each of the local control devices controls the use of the program in accordance with said entitlement information.

## Description

The present invention relates to a system for controlling the execution of a program or the like by a computer connected to a network, the system comprising a number of local controlling devices secured against unauthorized access.

It is currently possible to control the execution of a program or the like by providing a hardware device which is typically connected to a port of the computer running the program. During execution of the program the device is continuously polled and if the program does not detect the device, operation of the program will be ceased. Although in this manner some control of the execution of a program is possible, there is hardly any flexibility in the manner of control.

The invention aims to provide an improved system of the above-mentioned type.

According to the invention a system of the above-mentioned type comprises a number of local controlling devices secured against unauthorized access, each of said devices being connected to a corresponding computer, each of said devices comprising a processor, an address and means for communicating with the corresponding computer, and a central control unit connected to the network and comprising means for communicating with each of said local control devices through the network, wherein said control unit can forward an entitlement message to each of said local control devices, the entitlement message containing entitlement information regarding the use of the program, each of the local control devices controlling the use of the program in accordance with said entitlement information.

In this manner a flexible control on the execution of a program or the like is possible by loading any desired entitlement information into the local control device, wherein the use of the program is controlled in accordance with this entitlement information.

According to the invention the entitlement message may contain information with respect to the maximum number of uses and/or a time period for use and/or the type of use.

In order to enhance security of the system, the control unit forwards an entitlement message with an authentication.

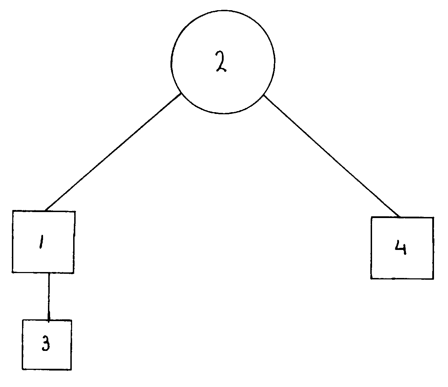

The invention will be further explained by reference to the drawing showing schematically a preferred embodiment of the invention.

In a system for controlling the execution of a program or the like by a computer 1, the computer 1 is connected to a network 2 in a manner not further shown. This network may be a broadcast network or a bidirectional network, for example the Internet. The system comprises a number of local controlling devices 3 which are secured against unauthorized access in a manner known per se. Each of said devices 3 is connected to a corresponding computer 1, wherein the drawing only shows one computer 1 and one device 3. The device 3 comprises a processor, a unique address and means for communicating with the corresponding computer 1 for example through a connection with a port of the computer 1. Of course, the device 3 may be a PC card.

Further, the system comprises a central control unit 4 connected to the network 2 and comprising means for communicating with each of the local devices 3 through the network 2.

The central control unit 4 can forward an entitlement message to each of the local control devices 3 through the network 2. The entitlement message contains an address to indicate to a specific local control device that this message is intended for this device. Further the entitlement is encrypted using a public key algorithm, for example and includes an authentication to ensure that the message is not tampered with. The local control device 3 decrypts the entitlement message using its private key, at least this private key being stored in a secure manner. The entitlement message contains entitlement information, such as the maximum number of uses and/or a time period for use and/or the type of use for the program. If desired, the entitlement message may contain update information providing new keys for future use. The entitlement information is stored within the secure part of the device 3. Of course, an entitlement message can also contain information instructing the processor to delete earlier forwarded entitlement information.

During execution of the program to be controlled, the program will pass an authenticated message to the local control device 3, wherein the processor of the device 3 processes this message in order to obtain a response which is returned to the program. The program will expect a particular response and if the response is not correct, execution of the program will be stopped. The response may be a fixed response or a response based on a zero-knowledge protocol or some other protocol. The authenticated message provided by the program to the local control device 3 may contain entitlement information either previously stored in the program or received from the central control unit 4 through the network 2.

It will be clear that the expected response will only be provided by the device 3 if the correct entitlement information is present in the device. This entitlement may be in the form of a time period during which the program may be used. A further possibility is to store a predetermined number of times during which the program may be used and each time a program is actually used, the number is decreased by one. Of course combinations of time periods and number of times are possible.

It is further possible to have a program which upon a first execution contacts the central control unit to download entitlement information into the local control device 3. Further the program and/or the device 3 may have the possibility to contact the central control unit if the entitlement information shows that the user is not entitled to any further use.

From the above it will be clear that the system of the invention provides a very flexible control on the use of a program. In this respect it is noted that the program may be any type of program such as a computer program, a film or any other data of interest to a user. Therefore, the wording "execution of a program" in this specification encompasses each use of a program, film, data or the like in a computer.

Although in the embodiment described the entitlement message is both encrypted and authenticated, it will be understood that it is also possible to operate the system described with entitlement messages which are either encrypted or authenticated only. In that case the local control device 3 will either only check the authentication or decrypt the entitlement message.

## Claims

1. System for controlling the execution of a program or the like by a computer connected to a network, the system comprising a number of local controlling devices secured against unauthorized access, each of said devices being connected to a corresponding computer, each of said devices comprising a processor, an address and means for communicating with the corresponding computer, and a central control unit connected to the network and comprising means for communicating with each of said local control devices through the network, wherein said control unit can forward an entitlement message to each of said local control devices, the entitlement message containing entitlement information regarding the use of the program, each of the local control devices controlling the use of the program in accordance with said entitlement information.

2. System according to claim 1, wherein the entitlement message contains information with respect to the maximum number of uses and/or a time period for use and/or the type of use.

3. System according to claim 1 or 2, wherein the central control unit comprises means to encrypt the entitlement message and to add an authentication, each local control device having means to decrypt the entitlement message and to check the authentication.

4. System according to claim 1, 2 or 3, wherein the central control unit comprises means to add an authentication, each local control device having means to check the authentication.

5. System according to claim 1, 2, 3 or 4, wherein the program during execution passes an authenticated message to the local control device, said device processing said message to return a response to the program depending on the entitlement information present in the device.

6. System according to claim 5, wherein the program compares the received response with a predetermined response, wherein further execution of the program is stopped if the received response is not correct.

7. System according to any one of the preceding claims, wherein the program and/or the corresponding local control device includes means to contact the central control unit upon an initial execution of the program and to request the transfer of an entitlement message.

8. System according to any one of the preceding claims, wherein the program and/or the corresponding local control device includes means to contact the central control unit to request the transfer of an entitlement message if the present entitlement information indicates that further use of the program is not allowed.

9. System according to any one of the preceding claims, wherein each of said local control devices comprises means to delete entitlement information.
